Europäisches Patentamt

**European Patent Office**

Office européen des brevets

(11) Publication number: **0 171 281 B1**

## EUROPEAN PATENT SPECIFICATION

(45) Date of publication of patent specification: **06.03.91**   (51) Int. Cl.⁵: **B60T 17/18**

(21) Application number: **85305581.2**

(22) Date of filing: **06.08.85**

(54) Emergency and parking air supply system for air brakes.

(30) Priority: **07.08.84 US 638441**

(43) Date of publication of application:
**12.02.86 Bulletin 86/07**

(45) Publication of the grant of the patent:
**06.03.91 Bulletin 91/10**

(84) Designated Contracting States:
**BE DE FR GB IT NL SE**

(56) References cited:
**DE-B- 1 274 903**
**GB-A- 2 017 241**
**US-A- 3 285 672**
**US-A- 3 443 839**
**US-A- 4 407 548**

(73) Proprietor: **Graham, John M.**
**820 North Delaware Street, No. 308**
**San Mateo California 94401(US)**

(72) Inventor: **Graham, John M.**
**820 North Delaware Street, No. 308**
**San Mateo California 94401(US)**

(74) Representative: **Bowman, Paul Alan et al**
**LLOYD WISE, TREGEAR & CO. Norman**
**House 105-109 Strand**
**London WC2R OAE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to an emergency and parking brake air supply system for air brakes according to the pre-characterizing part of claim 1

Trucks, as well as other large vehicles, generally use air brakes for stopping for both the tractor and the trailer. Air brakes include a service brake chamber which drives a push rod into a brake on position when air is applied to the service brake chamber. For parking purposes, a dual chamber air brake is often used. These dual chambered brakes include both a service brake chamber, for applying the brakes during normal operation, and what is called a spring brake chamber. The spring brake chamber includes a relatively heavy spring connected to the push rod. The spring is compressed only when air from a spring brake line is applied to the spring brake chamber. When the air in the spring brake chamber is vented, the spring brake spring mechanically drives the push rod to a brake on position. Thus, when a truck is parked and the air in the brake chambers is vented, the service brake chamber no longer actuates the brakes but the spring brake spring pushes the push rod into a spring brake on position thus applying the brakes. A braking system of this general type is disclosed in U.S. Patent No. 3,285,672.

Conventional dual chamber brakes can only be made so that the braking force applied by the spring brake spring is only about half of the braking force applied by the pressurization of the service brake chamber. This has made the use of the legal parking brake inadequate for emergency braking requirements, and has limited its effective usage to parking brake requirements only.

One reason behind this is found in the practical constraints on the design of dual chambered brakes. The diameters of the brake chambers are limited by the amount of room which exists under the vehicle. The service brake chamber diameter is thus the practical size limit for the diameter of the spring brake chamber. This limits the amount of force the spring brake chamber can exert against the spring brake spring to about the same force the service brake chamber can exert against the push rod. However, since spring brake springs exert the greatest force when fully compressed, the greatest force which the spring could exert on the push rod is when the spring is fully compressed. However, the push rod must move a certain distance before the brakes are applied so that the actual brake applying force exerted by the spring is substantially less than, such as 50% less than, the maximum service brake force.

Another problem with using dual chambered brakes for emergency raking is that there is usually no room to install these brakes on the front wheels of the vehicles. Therefore busses, both transit and school, and truck tractors generally only have dual chambered brakes on their rear wheels. This further reduces emergency (non-service brake) braking capacity of the vehicle.

At present, there are no statutes which provide for emergency brakes for air braked vehicles. There are statutes which govern parking brakes, and air braked vehicles must have them. The USA, Asia and Europe have accepted the spring brake for parking brake requirements only and have not yet specified it for any emergency brake requirements. Since something is better than nothing, the trucking industry uses their legal parking brake for emergency situations because nothing else exists for them to use, if the service brakes fail when a vehicle is in motion. However, because of the limited stopping power of spring brakes, and since they are usually not used on all braked wheels, they are not effective replacements for the service brakes which are designed to stop a vehicle in motion.

As noted above, the present invention is directed at an emergency and parking brake air supply system for use with air brake systems of the type including a brake chamber operably coupled to a brake to apply the brake when the brake chamber is pressurised, a service brake application line, a spring brake supply line, a pressure storage tank, and means for operating the air supply system, comprising a two-way check valve having first and second inlets, and an outlet coupled to the brake chamber, the second inlet being coupled to the service brake application line. According to the invention, means are provided for supplying pressurised air from the storage tank to the first inlet in response to venting the spring brake supply line, whereby pressurisation of the service brake application line causes pressurised air to flow through the two-way check valve and to the brake chamber, and venting the spring brake supply line caused pressurised air to flow from the storage tank through the two-way check valve and to the brake chamber. The use of a two-way check valve in this way to direct air to the brake chamber either when the service brake application line is pressurised or when the spring brake is vented is quite new. Particular advantages of systems according to the invention are that they are simple and inexpensive, and very suitable in retrofit operations.

Preferred systems according to the invention include a valve with an inlet port fluidly connected to the spring brake supply line; an exhaust port and a chamber port fluidly coupled to the storage tank. The valve is normally a quick release valve. However, instead of a quick release valve other valves, such as a two way check valve modified to include a spring for normally biasing the sealing member (commonly a ball) toward the inlet connected to the spring brake supply line, can be used. A quick release valve is nevertheless preferably used in this non-standard manner since it is commercially available. Initial pressurisation of the spring brake supply line can be used to fill the storage tank.

In such preferred embodiments, the first inlet to the two way check valve is connected to the exhaust port of the valve by a conduit, and the second inlet is connected to the service brake application line. A valve including a valve control port is connected to the spring brake supply line, a valve outlet is connected to the connection conduit and a valve inlet is connected to the ambient atmosphere. This valve is arranged and adapted to block fluid flow from the valve outlet to the valve inlet only when pressurised fluid below a first pressure is applied to the valve control port and to vent the connection conduit to atmosphere when the pressure at the valve control port is above a second pressure. A suitable such valve is a pilot check valve arranged and adapted to permit generally free flow of fluid from its inlet to its outlet at all times. Thus, whereby venting the inlet port and the second inlet causes pressurised air within the storage tank to flow through the quick release valve through the connection conduit, through the two way check valve, to the brake chamber. The quick release valve and a pilot check valve can be combined into a single valve structure to simplify installation and lower the cost of the system.

In another preferred feature of the invention, the inlet port of an exhaust valve is coupled to the outlet of the two way check valve, the exhaust valve having an exhaust valve chamber port fluidly connected to the brake chamber and an exhaust port connected to atmosphere. A pilot check valve may be fluidly coupled between the exhaust valve chamber port and the brake chamber, the pilot check valve having a control port fluidly connected to the spring brake supply line.

The present invention thus provides an air supply system that allows automatic activation of the service brakes in the event of loss of pressure in a vehicle's air supply line, such as if a trailer breaks loose from its tractor. If pressure is suddenly lost to the spring brake supply line, pressurized air will automatically be applied to the service brake chambers to effectively stop the vehicle even if pressure is also lost in the service brake application line. Systems of the invention can use existing air tanks or have additional tanks installed within the vehicle to be protected, typically a tractor or a trailer.

In preferred embodiments of the invention the outlet of the two way check (TWC) valve is connected to the inlet port of an exhaust valve. The exhaust valve is preferably a quick release valve, but may also be a relay valve or a relay emergency valve, all three being commercially available. The exhaust valve includes one or more chamber ports, connected to one or more service brake chambers, and an exhaust port for venting air in the service brake chambers to atmosphere when the air pressure at its inlet port is released. The E&P system can be used without an exhaust valve by allowing the exhaust port of the vehicle's foot valve to vent exhaust air pressure from the vehicle's service brake chambers; however, doing so slows down the response time. The other inlet of the TWC valve is connected to the service brake application line.

The connecting conduit, and thus the opposed inlet of the TWC valve and exhaust port of the quick release valve, are maintained at atmospheric pressure so long as the spring brake supply line is at an elevated pressure. This permits the unimpeded flow of air pressure from the spring brake supply line and service brake application line to the E&P tank and the exhaust valve, respectively, during normal operation. This is preferably accomplished using a pilot check valve having a control port connected to the spring brake supply line, an inlet opening to the ambient atmosphere and an outlet connected to the connecting conduit. See U.S. Patent No. 4,407,548. The pilot check valve can be replaced by other valves operating in a similar manner. For example, a pilot bleeder valve made by The Aro Corporation of Byron, Ohio as Model 9600, is much smaller and less expensive than a conventional pilot check valve and can be used instead of the pilot check valve. Pressure at the control port permits the free fluid flow between the pilot check valve inlet and outlet while a reduced pressure at the control port blocks passage of fluid from its inlet to its outlet.

Upon venting of the spring brake supply line, either by design or by accident, high pressure air will be automatically supplied to the service brake chambers via the exhaust valve from the service brake application line, if that is pressurized, or the E&P tank if it is not. In either event full service brake braking force is applied to the push rod to effectively stop the vehicle.

Most tractors and trailers use existing service brake air tanks as the pressurized air supply for their spring brakes. Since an additional tank is not necessary, except by choice, this is an especially attractive option when retrofitting a tractor's or a trailer's air brake system with an E&P system of the invention.

A single E&P air supply system can be used to supply several sets of air brakes if desired. One way to do so is to add a TWC valve between the service brake line and each set of service brake chambers (2) one axle or each wheel (1) and connect the other inlet of each added TWC valve to the exhaust port of the E&P system's quick release valve. This would provide true emergency brakes to the vehicle at low cost.

Tractors, at present, are required to have dual chambered air brakes on only one axle whether it be a two or three axle tractor. Even if more are desired for parking brake requirements, often there is no room to install additional dual chambered air brakes. In these cases, adding the E&P system of the invention provides true emergency braking at each wheel because the E&P system does not require extra space to be installed similar to dual chambered air brakes presently used for this purpose. Since the cost of a service brake chamber is considerably less than a dual chambered air brake assembly, true emergency braking can be had at each wheel at a cost considerably less than adding additional dual chambered air brakes.

Other features and advantages of the present invention will appear from the following description in which the preferred embodiment has been set forth in detail in conjunction with the accompanying drawing.

## BRIEF DESCRIPTION OF THE DRAWING

Fig. 1 is a schematic representation of an air brake system, incorporating the emergency and parking air supply system of the invention, for a two axle air braked tractor using conventional service brakes at one axle and conventional dual chamber air brakes at the other axle.

Fig. 2 is an enlarged view of one set of two-way check valve and quick release valve of Fig. 1.

Fig. 3 is an enlarged view of a single chamber port quick release valve of Fig. 1.

## DETAILED DESCRIPTION OF THE PREFERRED EMBODIMENT

Referring now to the figures, an air brake system 202 is used with a pair of conventional service brake chambers 204 on one axle and a pair of conventional dual chamber air brakes 206 on the other axle. Dual chamber air brakes 206 each include a service brake chamber 208 and a spring brake chamber 210. Pressurized air is supplied to spring brake chambers 210 from a pressurized air source 212 through a spring brake valve 214, a spring brake supply line 216, a conventional relay valve 218 and lines 220 which connect a spring brake inlet 222 with chamber ports 224 of relay valve 218. Relay valve 218 is, as mentioned above, a type of exhaust valve, and is used to speed up pressurizing and exhausting spring brake chambers 210. To do so, valve 218 is connected to an auxiliary pressurized air supply tank 226. The operation of this valve is conventional and is discussed with reference to Fig. 3 of U.S. Patent No. 4,407,548. When no relay valve 218 is used, tank 226 is not connected to the relay valve 218 and ports 222 are supplied directly from line 216.

Service brake chambers 208 and service brakes 204 are supplied pressurized air from a pressurized air source 228 through a pedal valve 230, a service brake application line 232, TWC valves 234, 236 and quick re lease valves 238, 240. Outlets 239, 241 of valves 234, 236 connect to inlet ports 243, 245 of quick release valves 238, 240. Lines 242, 244 connect chamber ports 246, 248 of quick release valves 238, 240 with the inlets 250, 252 of pilot check valves 254, 256. The outlets 258, 260 of valves 254, 256 are connected to chamber ports 262, 264 of service brake chambers 208 and 204 respectively. Exhaust ports 265, 267 of valves 238, 240 exhaust to atmosphere. The control ports 266 of pilot check valves 254 are connected to lines 220 by lines 268 while control ports 270 of pilot check valves 256 are connected to spring brake supply line 216 by a common line 272.

The structure thus far described is quite similar to the air brake system shown in Fig. 5 of U.S. Patent No. 4,407,548 with the exception of the TWC valves 234, 236 and the use of relay valve 218 and tank 226. To ensure the emergency pressurization of service brake chambers 208 and 204, two separate emergency and parking air supply systems (E&P systems) 274, 276 are incorporated into air brake system 202. E&P system 274 includes a quick release valve 278 having an inlet port 280 connected to spring brake supply line 216 by a line 282 and an exhaust port 284 connected to an inlet 286 of TWC valve 234 by line 288. Second inlets 289, 291 of TWC valves 234, 236 are connected to line 232. A chamber port 290 of valve 278 is fluidly connected to tank 226 so that tank 226 acts as both a reservoir for the normal pressurization of spring brake chambers 210 and also as an E&P tank for E&P system 274. A pilot check valve 292 is used to ensure that line 288 is maintained at ambient pressure whenever spring brake supply line 216, and thus lines 220, are pressurized. Pilot check valve 292 included a control port 294 connected to line 268, an inlet 296 connected to ambient atmosphere and an outlet 298 connected to line 288.

Referring now to E&P system 276, an E&P tank 298 is fluidly connected to the chamber port 300 of a quick release valve 302. Valve 302 includes an inlet port 304 fluidly connected to spring brake supply line 216 by a line 306 and an exhaust port 308 fluidly connected to an inlet 310 of TWC valve 236 by a line 312. A pilot check valve 314, used to ensure line 312 is maintained at ambient pressure when line 216 is pressurized, has its control port 316 connected to common line 272, its inlet 318 connected to ambient atmosphere and its outlet 320 connected to line 312.

In use, air brake system 202 normally has line 216 pressurized so that spring brake chambers 210 are pressurized thus permitting brake actuation based on the presence or absence of pressure in service brake application line 232 which is controlled by the actuation of pedal valve 230. Assuming line 216 is pressurized, applying pressure to line 232 causes pressurized air flow through TWC valves 234, 236, quick release valves 238, 240, lines 242, 244 and pilot check valves 254, 256. Since line 220 is pressurized, control ports 266, 270 are supplied with pressurized air sufficient to allow free flow of air between inlets 250, 252, and outlets 258, 260 of pilot check valves 254, 256.

Upon venting spring brake supply line 216 to atmosphere, spring brake chambers 210 are exhausted to atmosphere through their inlets 222, through lines 220 and out the exhaust port 232 of relay valve 218. It should be noted that relay valve 218 does not exhaust the pressurized air within tank 226 when this occurs. This permits spring brake chambers 210 to apply braking force to their associated brakes, not shown, according to the action of their spring brake springs in a conventional manner. Simultaneously, inlet ports 280, 304 of quick release valves 278, 302 are also dumped to atmosphere thus sealing tanks 226, 298 from lines 282, 306 to allow the tanks to pressurize lines 288, 312 respec tively. Since line 216 has been dumped to atmosphere, control ports 294, 316 of pilot check valves 292, 314 are also at reduced pressure so that pilot check valves 292, 314 no longer allow air within lines 288, 312 to be exhausted to atmosphere. The high pressure air from tanks 226, 298 is then supplied to service brake chambers 208 and 204.

It should be understood that the braking force applied by air brakes 206 will result from both the pressurization of service brake chambers 208 and the spring braking force of spring brakes 210; when existing spring brakes are used this compounding of braking force would need to be considered in designing such a system. This force compounding problem is not present when the E&P systems of the invention are used with conventional single chamber service brakes but results when conventional spring (dual chamber) brakes are used.

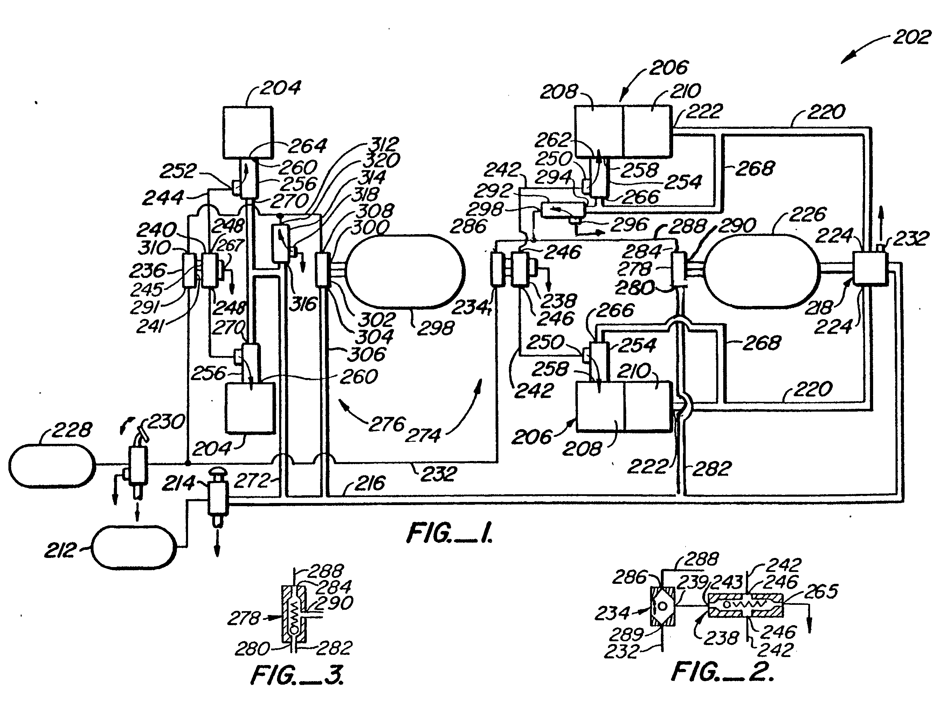

The preferred embodiment has been described in terms of a braking system for tractors. It is useful for other types of air braked vehicles including busses and trailers. With trailers the air in the spring brake supply line is controlled by a valve, corresponding to spring brake control valve 214 in Fig. 1, called the tractor protection valve.

Modification and variation can be made to the disclosed embodiment without departing from the subject of the invention as defined by the following claims. If desired, quick release valves 278, 302 could be combined with pilot check valves 292, 314, respectively into a single valve.

## Claims

1. An emergency and parking brake air supply system (274,276) for use with air brake systems of the type including a brake chamber (206,204) operably coupled to a brake to apply the brake when the brake chamber is pressurised, a service brake application line (232), a spring brake supply line (216), a pressure storage tank (226,298), and means for operating the air supply system, the operating means comprising a two-way check valve (234,236) having first and second inlets (286,289,310,291), and an outlet (239,241) coupled to the brake chamber, the second inlet (289,291) being coupled to the service brake application line;
CHARACTERISED IN THAT
means are provided (278,292,302,314) for supplying pressurised air from the storage tank (226,298) to the first inlet (286,310.) in response to venting the spring brake supply line; whereby pressurisation of the service brake application line (232) causes pressurised air to flow through the two-way check valve (234,236) and to the brake chamber (206,204), and venting the spring brake supply line (216) causes pressurised air to flow from the storage tank (226,298) through the two-way check valve (234,236) and to the brake chamber (206,204).

2. An air supply system according to Claim 1 CHAPACTERISED BY including a valve (278, 302) with an inlet port (280, 304) fluidly connected to the spring brake supply line; an exhaust port (284, 308) and a chamber port (290, 300) fluidly coupled to the storage tank, and wherein:
the first inlet to the two way check valve (234, 236) is connected to the exhaust port of the valve (278,302) by a conduit (288,310), the second inlet (289, 291) is connected to the service brake application line (232),
a valve (292, 314) including a valve control port (294, 316) is connected to the spring brake supply line (216), a valve outlet (298, 320) is connected to the connection conduit and a valve inlet (296, 318) is connected to the ambient atmosphere, which valve is arranged and adapted to block fluid flow from the valve outlet to the valve inlet only when pressurised fluid below a first pressure is applied to the valve control port and to vent the connection conduit to atmosphere when the pressure at the valve control port is above a second pressure;

whereby venting the inlet port (280, 304) and the second inlet (289, 291) causes pressurised air within the storage tank to flow through the quick release valve through the connection conduit, through the two way check valve, to the brake chamber.

3. An air supply system according to Claim 2 CHARACTERISED IN THAT the valve (292, 314) is a pilot check valve arranged and adapted to permit generally free flow of fluid from its inlet to its outlet at all times.

4. An air supply system according to any preceding Claim CHARACTERISED IN THAT the inlet port (243, 245) of an exhaust valve (238, 240) is coupled to the outlet (239,241) of the two way check valve (234, 236), the exhaust valve having an exhaust valve chamber port (246, 248) fluidly connected to the brake chamber (204, 208) and an exhaust port (265, 267) connected to atmosphere.

5. An air supply system according to Claim 4 CHARACTERISED IN THAT a pilot check valve (254, 256) is fluidly coupled between the exhaust valve chamber port (246, 248) and the brake chamber (204, 208), the pilot check valve (254, 256) having a control port (266, 270) fluidly connected to the spring brake supply line (216).


**Revendications**

1. Système d'amenée d'air comprimé de frein de secours ou de stationnement pour l'exploitation avec systèmes de freins pneumatique du modèle à chambre de frein (206,204) accouplé en service avec un frein prévu pour l'application du frein quand la chambre de frein est mise en charge, une tubulure d'application de frein de service (232), une tubulare d'apport de frein à ressort (216), un réservoir d'air comprimé (226, 298) et des moyens d'exploitation du système d'amenée d'air, lesdits moyens comportant un robinet d'arrêt à 2-voies (234, 236) ayant une première et deuxième entrée (286,289,310,291) et une sortie (239,241) accouplée à la chambre de frein, la deuxième entrée (269, 291 étant accouplée à la tubulure d'application de frein de service;
CARACTERISE EN CE QUE des moyens sont prévus (278,292,302,314) pour l'apport d'air sous pression depuis le réservoir (226, 298) à la première entrée (286,310)en réponse à l'échappement de tubulure d'amenée de frein à ressort; la mise en charge de la tubulure d'application de frein de service (232) provoquant l'écoulement d'air sous pression par le robinet d'arrêt à 2-voies (234,236), et l'échappement de tubulure d'amenée de frein à ressort (216) provoque l'écoulement d'air sous pression depuis le réservoir (226, 298) par le robinet d'arrêt 2-voies (234,236) et la chambre de frein (206,204).

2. Système d'amenée d'air selon la revendication 1 CARACTERISE PAR l'inclusion d'un robinet (278,302) avec un orifice d'entrée (280,304) en raccord fluide avec la tubulure de frein à ressort; un orifice de sortie (284,308) et un orifice de chambre (290,300) en accouplement fluide avec le réservoir, et selon lequel;
la première amenée de robinet d'arrêt à 2-voies (234,236) est raccordée à l'opercule de sortie de robinet (278,302) par un conduit (288,310), la deuxième amenée (2389,291 est raccordée à la tubulure d'application de frein de service (232).
un robinet (292,314) comportant un orifice régulateur de robinet (294,316) est raccordé à la tubulure de frein à ressort (216), une sortie de robinet (298,320) est raccordée au conduit de raccord et une amenée de robinet (296,318) est raccordée à l'atmosphère ambiance, ledit robinet étant disposé et adapté pour bloquer l'écoulement de fluide de la sortie de robinet à l'amenée de robinet exclusivement lorsque le fluide sous pression inférieure à une première pression est appliqué à l'opercule régulatrice de robinet et pour purger le raccord de conduit en atmosphère, lorsque la pression à l'opercule régulatrice de robinet est supérieure à une deuxième pression
selon lequel la purge d'opercule d'entrée (280,304) et de deuxième entrée provoque l'écoulement de l'air sous pression dans le réservoir par le robinet de décharge rapide par le conduit de raccord, passant par le robinet d'arrêt à 2-voies, à le chambre de frein.

3. Système d'amenée d'air selon la revendication 2 CARACTERISE EN CE QUE le robinet (292,314) est un robinet pilote d'arrêt disposé et adapté pour permettre l'écoulement généralement libre en permanence du fluide depuis son entrée à sa sortie.

4.  Système d'amenée d'air selon toute revendication précédente CARACTERISE EN CE QUE
    l'opercule d'entrée (243,245 ) d'un robinet
    d'échappement (238,240) est raccordé à la
    sortie (239,241) du robinet d'arrêt à 2-voies
    (234,236), le robinet d'échappement ayant un
    orifice de robinet d'échappement de chambre
    (246,248) en raccord fluide avec la chambre
    de frein (204,208) et un orifice d'échappement
    (265,267) raccordée en atmosphère.

5.  Système d'amenée d'air selon la revendication
    4 CARACTERISE EN CE QU'un robinet d'arrêt
    pilote (254,256) est en raccord fluide entre
    l'opercule de robinet d'échappement de chambre (246,248) et la chambre de frein (204,208),
    le robinet pilote d'arrêt (254,256) ayant un orifice régulateur (266,270) en raccord fluide avec
    la tubulure d'amenée de frein à ressort (216).

**Ansprüche**

1.  Not- und Park-Bremsendruckluftversorgungssystem (274, 276) zum Gebrauch mit Druckluftbremsensystemen der Art mit einer Bremskammer (206, 204), welche bedienbar mit einer
    Bremse zur Betätigung der Bremse verbunden
    ist, wenn die Bremskammer unter Druck steht,
    einer            Betriebsbremsenbetätigungsleitung
    (232), einer Federbremsenversorgungsleitung
    (216) , einem Druckspeichertank (226, 298) ,
    und einer Vorrichtung zur Bedienung des
    Druckluftversorgungssystems, wobei die Be-
    dienungsvorrichtung ein Wechselrückschlag-
    ventil (234, 236) umfasst, das erste und zweite
    Einlässe (286, 289, 310, 291) und einen Auslass (239, 241), der mit der Bremskammer
    verbunden ist, hat, wobei der zweite Einlass
    (289, 291) mit der Betriebsbremsenbetäti-
    gungsleitung verbunden ist; DADURCH GE-
    KENNZEICHNET, DASS eine Vorrichtung
    (278, 292, 302, 314) vorgesehen ist, um unter
    Druck gesetzte Luft von dem Speichertank
    (226, 298) zum ersten Einlass (286, 310) in
    Reaktion auf die Entlüftung der Federbremsen-
    versorgungsleitung zuzuführen; wobei Belüf-
    tung der Betriebsbremsenbetätigungsleitung
    (232) verursacht, dass unter Druck gesetzte
    Luft durch das Wechselrückschlagventil (234,
    236) und zur Bremskammer (206, 204) fliesst,
    und Entlüftung der Federbremsenversorgungsleitung (216) verursacht, dass unter Druck gesetzte Luft von dem Speichertank (226, 298)
    durch das Wechselrückschlagventil (234, 236)
    und zur Bremskammer (206, 204) fliesst.

2.  Druckluftversorgungssystem nach Anspruch 1,
    GEKENNZEICHNET DURCH Einschliessen eines Ventils (278, 302) mit einer Einlassöffnung
    (280, 304) in Flüssigkeitsverbindung mit der
    Federbremsenversorgungsleitung; einer Auslassöffnung (284, 308) und einer Kammeröffnung (290, 300) in Flüssigkeitsverbindung mit
    dem Speichertank, und worin:
    der erste Einlass zum Wechselrückschlagventil
    (234, 236) mit der Auslassöffnung des Ventils
    (278, 302) durch einen Kanal (288, 310) verbunden ist, der zweite Einlass (289, 291) mit
    der  Betriebsbremsenbetätigungsleitung  (232)
    verbunden ist, ein Ventil (292, 314), das eine
    Ventilkontrollöffnung (294, 316) einschliesst,
    mit der Federbremsenversorgungsleitung (216)
    verbunden ist, ein Ventilauslass (298, 320) mit
    dem Verbindungskanal verbunden ist und ein
    Ventileinlass (296, 318) mit der umgebenden
    Atmosphäre verbunden ist, welches Ventil angeordnet und verwendbar ist, dass es Flüssigkeitsstrom von dem Ventilauslass zum Ventileinlass nur dann sperrt, wenn unter Druck gesetzte Flüssigkeit unter einem ersten Druck auf
    die Ventilkontrollöffnung aufgebracht wird, und
    dass es den Verbindungskanal zur Atmosphäre
    entlüftet, wenn der Druck an der Ventilkontrollöffnung über einem zweiten Druck liegt; wobei
    Entlüftung der Einlassöffnung (280, 304) und
    des zweiten Einlasses (289, 291) verursacht,
    dass unter Druck gesetzte Luft innerhalb des
    Speichertanks durch das Schnell-Löseventil
    durch den Verbindungskanal, durch das Wechselrückschlagventil zur Bremskammer fliesst.

3.  Druckluftversorgungssystem nach Anspruch 2,
    DADURCH GEKENNZEICHNET, DASS das
    Ventil (292, 314) ein Steuerrückschlagventil ist,
    das angeordnet und verwendbar ist, um allgemein freien Fluss von seinem Einlass zu seinem Auslass jederzeit zu gestatten.

4.  Druckluftversorgungssystem nach einem der
    vorhergehenden Ansprüche, DADURCH GEKENNZEICHNET, DASS die Einlassöffnung
    (243, 245) eines Auslassventils (238, 240) mit
    dem Auslass (239, 241) des Wechselrückschlagventils (234, 236) verbunden ist, wobei
    das Auslassventil eine Auslassventilkammeröffnung (246, 248) in Flüssigkeitsverbindung mit
    der Bremskammer (204, 208) und eine Auslassöffnung (265, 267) verbunden mit Atmosphäre hat.

5.  Druckluftversorgungssystem nach Anspruch 4,
    DADURCH GEKENNZEICHNET, DASS ein
    Steuerrückschlagventil (254, 256) in Flüssig-
    keitsverbindung zwischen der Auslassventil-

kammeröffnung (246, 248) und der Bremskammer (204, 208) ist, wobei das Steuerrückschlagventil (254, 256) eine Kontrollöffnung in Flüssigkeitsverbindung mit der Federbremsenversorgungslinie (216) hat.

FIG._1.

FIG._2.

FIG._3.